Europäisches Patentamt

European Patent Office

Office européen des brevets

(11) Publication number: **0 055 760**
**B1**

(12) **EUROPEAN PATENT SPECIFICATION**

(45) Date of publication of patent specification: **06.11.85**

(51) Int. Cl.⁴: **H 02 G 1/00, H 01 B 15/00**

(21) Application number: **81902058.7**

(22) Date of filing: **13.07.81**

(86) International application number:
**PCT/NO81/00032**

(87) International publication number:
**WO 82/00388 04.02.82 Gazette 82/04**

(54) **METHOD OF CONVERTING A CABLE IN THE GROUND INTO A CLOSED GUIDING TRACK FOR INSERTION OF NEW CONDUCTORS.**

(30) Priority: **14.07.80 NO 802117**

(43) Date of publication of application:
**14.07.82 Bulletin 82/28**

(45) Publication of the grant of the patent:
**06.11.85 Bulletin 85/45**

(84) Designated Contracting States:
**AT CH DE FR GB LI NL SE**

(56) References cited:
**CH-A- 604 338**
**DE-A-2 164 737**
**DE-A-2 337 462**
**DE-A-2 449 303**
**DE-B-2 023 622**
**GB-A-1 531 585**
**GB-A-2 030 261**

**J. Brandrup and E.H. Immergut, "Polymer handbook", second edition, published 1975, John Wiley & Sons, page IV-243**

**"Poly (ethylene)" and page IV-260, "cellulose"**

(73) Proprietor: **EDVARDSEN, Einar**
**Idrettsveien**
**N-1990 Sorum (NO)**

(72) Inventor: **EDVARDSEN, Einar**
**Idrettsveien**
**N-1990 Sorum (NO)**

(74) Representative: **Mathol, Heimen et al**
**EXTERPATENT Willem Witsenplein 4**
**NL-2596 BK 's-Gravenhage (NL)**

Courier Press, Leamington Spa, England.

# Description

The invention relates to a method for converting existing electric cables comprising an external casing installed in the ground, in buildings, freely in open sections suspended between masts etc., into tracks or conduits for reception of new conductors.

The provision of cables for transmission of telecommunication services involves high costs and the need of detailed planning as well as a high amount of labour force by the operation, as considerations have to be taken of existing pipelines, cables etc., buildings and traffic conditions.

With the change to transmission of telecommunication services by optical fibres, it will be common to install new systems with cables based on this technique. A great deal of older cable types, such as telecommunication cables and coaxial cables will thereby become redundant.

So far no method is known for the withdrawal of the internal conductors and insulation materials in such cables. By such a method, the external casings of existing cables could be used as the cable sheath or mantle to serve as a track or conduit for the new conductors which could be optical fibres or other conductors. Great savings of time and also economy would be achieved.

Actual cables in this connection are coaxial cables and telecommunication cables. Even though the coaxial cables formerly used and laid in the ground have different constructions, different electrical parameters and different reinforcement, the pipes or conduits and insulation material of the cables are substantially the same. The very first cables however, have distance washers made of ebonite, whereas the newer cables have distance washers made of polyethylene. As an example, a large coaxial cable with an internal diameter of 9,5 mm and a centre conductor with a diameter of 2,6 mm, has distance washers with a thickness of 2 mm every 33rd mm. The telecommunication cable or twin set cable has a plurality of pairs with copper conductors usually insulated with paper or possibly with cotton.

For the removal of the conductor or conductors of those cables, the conductor or conductors as well as the internal insulation material may be transformed to free particles by a suitable method, the particles thereafter being removed by suitable means, or the insulation material of the cable may be dissolved or broken down and thereafter being removed by suitable means, whereafter the conductor/conductors may be withdrawn out of the cable pipe or outer conductor.

The method according to the invention therefore comprises the steps of transforming and/or removing the internal insulation material of the existing cable over a suitable length and subsequently withdrawing the existing conductor/conductors from the cable out of one end thereof.

It is observed that the removal of insulation from electric conductors in known per se from DE—A—23 37 462, DE—B—20 23 622 and from DE—A—24 49 303. The present invention however relates to such a treatment at unaccessible locations, so as to render it possible to remove the internal conductor(s) and to replace them by other (more modern) conductors. GB—A—2 030 261 and GB—A—1 531 585 shown milling and drilling techniques for removing material from the inside of pipes. The present invention deals with the removal of conductors from the interior of cables by transforming the internal insulation material and thus rendering said removal possible.

Removal of the insulating material may be performed by use of a chemical solvent, e.g. xylene, copper ethylene diamine or an oxidizing agent, e.g. pressurized oxygen, from one end, thereby dissolving or breaking down the material. The center conductor hereby may be withdrawn as there will be a sufficiently large clearance between the center conductor and the coaxial cable pipe.

It is further observed that DE—A—21 64 737 and CH—A—604 338 describe methods of fusing the composed insulation of a metal conductor for its removal in order to save the metal. No suggestions are given to arrive at a method for converting electric cables installed in the ground for reception of new conductors.

In another embodiment of the method according to the invention, heat is used to melt the internal insulation material in coaxial cables, the insulation material thereby being transformed to a coating substantially continuously provided on the internal wall of the cable pipe. The heat for melting the insulation material may be supplied by means of a suitable heat element guided on the center conductor of the coaxial cable, the element being supplied with electrical energy by the center conductor, the outer conductor of the cable and/or a pushing hose provided around the core, which hose forces the element through the length of the cable pipe. Heat may also be supplied by applying electrical potential to the center conductor and/or the outer conductor, the insulation material thereby being melted by the heat developed from the electrical resistance.

The melted insulation material will, by virtue of the force of gravity, collect in the lower part of the cable pipe, as a substantially continuous coating. Within the parts of the cable not being in the horizontal position, a flow of melted or viscous insulation material will move to the lower positioned parts of the cable pipe, depending on how much and for how long heat is supplied. To a certain extent this partly will restrict the free internal passage of the cable pipe, but however, will allow the entrance of new conductors.

A further embodiment of the method according to the invention as applied in a coaxial cable, comprises removing the insulating washers by introducing a pressurized fluid into one end of the mantle, the fluid gradually creating a pressure drop against the subsequent washers in the cable along substantially the entire length of the cable, the washers thereby being forced out of the other end of the cable together with their center conductor which is simultaneously subjected to tension forces originating from the other end of the cable.

In some cables the insulation material does not melt under increased temperature. In those cases, the conversion of the cable for reception of new conductors is performed by removing the internal insulation material of the cable by applying electrical potential to one or more conductors, the insulation material thereby being carbonized so as to reduce the friction when withdrawing the conductor(s).

In the drawing:

Fig. 1 shows a longitudinal section through a typical coaxial cable,

Fig. 2 a cross-section through a typical coaxial cable,

Fig. 3 a longitudinal section through a typical telecommunication cable,

Fig. 4 a cross-section through a typical telecommunication cable,

Fig. 5 an enlarged detail marked V—V in Fig. 3,

Fig. 6 a longitudinal section of a coaxial cable with a heating element inserted, and

Fig. 7 discloses a principal sketch of a coaxial cable where the insulation washers are from one end of the cable exposed to pressure from a pump and the center conductor is subjected to tension originating from the other end of the cable.

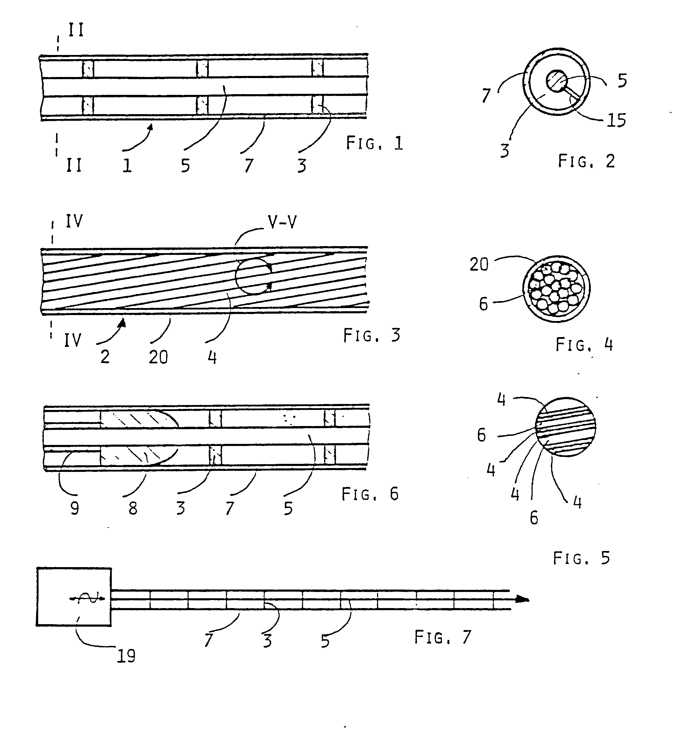

Fig. 1 and 2 discloses the basic construction of a coaxial cable 1 with insulation washers 3, a center conductor 5 and a coaxial cable pipe or outer conductor 7. The insulation washer 3 is designed as an open ring body with a split 15.

Fig. 3 shows a telecommunication cable 2 constructed of several pairs of conductors 6 having a surrounding insulation 4 as is best shown enlarged in Fig. 5. The outer mantle 7 of the telecommunication cable surrounds the internal conductors.

Only the basic construction of the telecommunication and coaxial cables is shown in the figures. In addition to the disclosed parts such cables have different outer cover means.

By the introduction of a chemical solvent, for example xylene into a coaxial cable, the insulation washers 3 may be dissolved. The insulation washers 3 usually are manufactured of polyethylene.

The introduction of xylene is performed by means of a thin hose which outer diameter is less than the distance between the center conductor and the internal wall of the cable pipe. By the introduction of xylene through the hose, the xylene together with the dissolved insulation material is transported out of the cable pipe. For a quicker reaction the solvent may be heated.

The chemical solvent also may be introduced into one end of the cable in greater quantities to penetrate through the split in the different insulation washers and will thereby simultaneously with the penetration, dissolve parts of the washers and transport these to the other end of the cable as the cable is open in the joints to collect the penetrating xylene. Polyethylene dissolved in xylene is of low viscosity and therefore suitable for this purpose.

Into paper insulated telecommunication cables the solvent, for example copper ethylene diamine, may be supplied pressurized into the one end of the cable. At the other end of the cable a vacuum pump may be provided to accelerate the penetration of the liquid. Copper ethylene diamine dissolves the paper insulation forming a relatively low viscosity liquid. The solvent may be diluted with water as it normally has a higher viscosity than water. The penetration of the liquid hereby is made easier.

After the paper insulation has been dissolved, the conductors of the cable may be withdrawn out of the cable as the solution of copper ethylene diamin and paper will act as a lubricating agent.

Melting of the insulation washers in a coaxial cable may be provided by insertion of a heating element 8, designed with a center aperture for the entrance of the center conductor 5, and being inserted into one end of the cable on the center conductor. The insertion is performed by means of a hose 9 pushing the heating element into the cable. Energizing of the heating element may be performed by the outer conductor 7 of the coaxial cable 1, the center conductor 5 or possibly the hose 9. The heating element is heated before insertion in the cable pipe. Polyethylene melts to a high viscosity mass at 110—130°C and melting of the washers may be performed by supply of a sufficient amount of energy to the heating element and simultaneously insertion of the heating element through the cable pipe 7 by virtue of pressure from the hose 9. The melted material of the insulation washers will be deposited on the inner wall of the coaxial pipe and serve as a suitable lubrication coating for the subsequent withdrawal of the center conductor and possibly for the later insertion of new conductors as the distributed polyethylene will cover possible surface reliefs in the coaxial cable pipe. By heating of the heating element to 400°C, the polyethylene will have a low viscosity and simplify the method.

Fig. 7 discloses the method by connection to the first end of a coaxial cable 1 of a pulsating pump introducing a liquid into the coaxial cable with a superimposed oscillation. At the same time tension is exerted onto the center conductor at the other end of the cable. As the liquid penetrates through the split 15 in the insulation washers 3, a pressure will be exerted on all the washers over the entire length of the cable and force these simultaneously with the action of the tension on the center conductor, out of the other end of the cable.

**Claims**

1. A method for converting existing electric cables comprising an external casing installed in the ground, in buildings, freely in open sections suspended between masts etc., into tracks or conduits for reception of new conductors, characterized by transforming and/or removing the internal insulation material (3, 4) of the existing cable (1, 2) over a suitable length and subsequently withdrawing the existing conductor(s) (5, 6) from the cable (1, 2) out of one end thereof.

2. The method according to claim 1, characterized by removing the internal insulation material (3, 4) by supplying a chemical solvent, e.g. xylene, copper ethylene diamine, or an oxidizing agent, e.g. pressurized oxygen, from one end, thereby dissolving or breaking down the material.

3. The method according to claim 1 applied to a coaxial cable, characterized by supplying heat to the internal insulation material (3) to melt said material and to loosen the internal conductor(s).

4. The method according to claim 3, characterized in that internal distance washers (3) are melted by the heat supply, such that the melted washers convert into a substantial continuous coating on the internal surface of the outer conductor (7).

5. The method according to claim 3, characterized by supplying heat to the internal insulation material by means of a heating element (8) which is guided on the center core (5) of the coaxial cable, the element being energized by the center core, the outer conductor (7) of the cable and/or a pushing hose (9) provided around the core, which hose forces the element through the length of the outer conductor.

6. A method according to claim 3, characterized in supplying heat to the insulation material (3) by application of electrical power to the center core (5) and/or the mantle (7), said insulation material thereby melting by the heat from the electrical resistance.

7. The method according to claim 1 as applied to a coaxial cable, characterized by removing internal distance washers (3) by introducing a pressurized fluid into one end of the mantle, the fluid gradually creating a pressure drop against the subsequent washers in the cable along substantially the entire length of the cable, the washers (3) thereby being forced out of the other end of the cable together with their center conductor (5) which is simultaneously subjected to tension forces originating from the other end of the cable length.

8. The method according to claim 1, characterized by removing the internal insulation material (3, 4) of the cable (1, 2) by applying electrical potential to one or more conductors (5, 6), the insulation material (3, 4) thereby being carbonized so as to reduce the friction when withdrawing the conductor(s) (5, 6).

## Revendications

1. Un procédé de conversion de câbles électriques existants et comprenant une enveloppe extérieure, ces câbles étant installés dans le sol, dans des immeubles, librement dans des sections à l'air libre suspendues entre des pylones, etc., en voies ou conduits de réception de nouveaux conducteurs, caractérisé par la transformation et/ou l'enlèvement du matériau isolant interne (3, 4) du câble existant (1, 2) sur une longueur adéquate et l'enlèvement subséquent du ou des conducteur(s) existant(s) (5, 6) du câble hors de l'une de ses extrémités.

2. Le procédé selon la revendication 1, caractérisé par l'enlèvement du matériau d'isolation interne (3, 4) en amenant un solvant chimique, tel que du xylène, du cuproéthylènediamine, ou un agent oxydant, tel que de l'oxygène sous pression, à partir de l'une des extrémités, puis la dissolution ou l'arrachage du matériau.

3. Le procédé selon la revendication 1, appliqué à un câble coaxial, caractérisé par la fourniture de chaleur au matériau d'isolation interne (3) pour fondre ledit matériau et libérer le ou les conducteur(s) interne(s).

4. Le procédé selon la revendication 3, caractérisé en ce que les rondelles internes d'écartement (3) sont fondues par la fourniture de chaleur de telle façon que les rondelles se convertissent en un revêtement sensiblement continu sur la surface interne du conducteur extérieur (7).

5. Le procédé selon la revendication 3, caractérisé par la fourniture de chaleur au matériau d'isolation interne à l'aide d'un élément chauffant (8) qui est guidé sur l'âme centrale (5) du câble coaxial, l'élément étant alimenté en énergie par l'âme centrale, le conducteur extérieur (7) du câble et/ou un tube flexible poussant (9) prévu autour de l'âme et qui repousse l'élément sur toute la longueur du conducteur extérieur.

6. Un procédé selon la revendication 3, caractérisé par la fourniture de chaleur au matériau isolant (3) en appliquant une puissance électrique à l'âme centrale (5) et/ou à l'enveloppe (7), ledit matériau isolant fondant ainsi sous l'effet de la chaleur de la résistance électrique.

7. Le procédé selon la revendication 1, tel qu'appliqué à un câble coaxial, caractérisé par l'enlèvement des rondelles internes d'écartement (3) en introduisant un fluide sous pression à l'une des extrémités de l'enveloppe, ce fluide créant progressivement une chute de pression sur les rondelles qui se suivent dans le câble, sensiblement sur toute la longueur du câble, les rondelles (3) étant ainsi repoussées à l'autre extrémité du câble avec leur conducteur central (5) qui est soumis en même temps à des forces de traction à partir de l'autre extrémité de la longueur du câble.

8. Le procédé selon la revendication 1, caractérisé par l'enlèvement du matériau interne d'isolation (3, 4) du câble (1, 2) en appliquant un potentiel électrique à un ou plusieurs conducteurs (5, 6), le matériau d'isolation (3, 4) y étant ainsi carbonisé de façon à réduire le frottement au retrait du ou des conducteur(s) (5, 6).

## Patentansprüche

1. Verfahren zum Umwandeln bestehender elektrischer Kabel mit einer äußeren Ummantelung, welche im Boden oder in Gebäuden verlegt sind oder frei in offenen Abschnitten zwischen Masten etc. aufgehängt sind in Schienen oder Leitungen zur Aufnahme von neuen Leitern, gekennzeichnet durch Umwandeln und/oder Entfernen des inneren Isoliermaterials (3, 4) der bestehenden Kabel (1, 2) über eine geeignete Länge und dem nachfolgenden Herausziehen des bestehenden Leiters oder der bestehenden Leiter (5, 6) aus dem Kabel (1, 2) aus einem Ende des Kabels.

2. Verfahren nach Anspruch 1, dadurch gekennzeichnet, daß das Entfernen des inneren Isoliermaterials (3, 4) durch Zuführen eines chemischen Lösungsmittels, zum Beispiel Xylen, Kupfer-ethylen-Diamin oder ein Oxydationsmittel, zum Beispiel unter Druck stehender Sauerstoff, von einem Ende erfolgt, wodurch das Material aufgelöst oder zerstört wird.

3. Verfahren nach Anspruch 1, zur Anwendung bei einem Koaxialkabel, dadurch gekennzeichnet, daß Hitze auf das innere Isoliermaterial (3) aufgebracht wird, um dieses Material zu schmelzen und den oder die inneren Leiter freizugeben.

4. Verfahren nach Anspruch 3, dadurch gekennzeichnet, daß die inneren Isolierscheiben (3) durch Hitzezufuhr aufgeschmolzen werden, derart, daß sich die aufgeschmolzenen Scheiben in eine im wesentlichen ununterbrochene Schicht auf der inneren Oberfläche des Außenleiters (7) umwandeln.

5. Verfahren nach Anspruch 3, dadurch gekennzeichnet, daß Hitze auf das innere Isoliermaterial mittels eines Heizelementes (8) aufgebracht wird, welches auf dem Mitten-Leiter (5) des Koaxialkabels geführt wird, wobei das Element von dem Mittenleiter, dem Außenleiter (7) des Kabels und/ oder eines Schubschlauches (9), welcher um den Mittenleiter angeordnet ist, mit Energie versorgt wird, wobei der Schlauch das Element durch die Länge des Außenleiters zwingt.

6. Verfahren nach Anspruch 3, dadurch gekennzeichnet, daß Hitze auf das Isoliermaterial (3) durch Aufbringen von elektrischer Leistung auf den Mittenleiter (5) und/oder die Ummantelung (7) aufgebracht wird, so daß das Isoliermaterial durch die aus dem elektrischen Widerstand entstehende Hitze aufgeschmolzen wird.

7. Verfahren nach Anspruch 1 zur Anwendung bei einem Koaxialkabel, dadurch gekennzeichnet, daß die inneren Abstandshalter (3) durch Einbringen eines unter Druck stehenden Fluides von einem Ende der Ummantelung entfernt werden, wobei das Fluid nacheinander einen Druck gegenüber den hintereinanderliegenden Scheiben in dem Kabel im wesentlichen entlang der gesamten Länge des Kabels aufbaut, so daß die Scheiben (3) zusammen mit ihrem Mittenleiter (5), auf den gleichzeitig eine Zugkraft vom anderen Ende der Kabellänge aufgebracht wird, aus dem anderen Ende des Kabels herausgedrückt werden.

8. Verfahren nach Anspruch 1, dadurch gekennzeichnet, daß das Entfernen des inneren Isoliermaterials (3, 4) des Kabels (1, 2) durch Zuführen eines elektrischen Potentials auf einen oder mehr Leiter (5, 6) erfolgt, so daß das Isoliermaterial (3, 4) verkohlt und die Reibung verringert wird, wenn der oder die Leiter (5, 6) entfernt werden.

0 055 760

FIG. 1

FIG. 2

FIG. 3

FIG. 4

FIG. 6

FIG. 5

FIG. 7

1